Europäisches Patentamt

European Patent Office

Office européen des brevets

(19)

(11) **EP 1 569 355 A2**

(12) # EUROPEAN PATENT APPLICATION

(43) Date of publication:
**31.08.2005 Bulletin 2005/35**

(51) Int Cl.7: **H04B 1/707**

(21) Application number: **05250414.9**

(22) Date of filing: **27.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **27.02.2004 GB 0404409**

(71) Applicant: **KABUSHIKI KAISHA TOSHIBA**
**Tokyo 105-8001 (JP)**

(72) Inventors:
• **Chow, Yuk Ching**
**Bristol BS1 4ND (GB)**

• **Fitton, Michael Philip**
**Bristol BS1 4ND (GB)**
• **Rizvi, Khurram Ali**
**Bristol BS1 4ND (GB)**
• **Ismail, Mohamed Rafiq**
**Bristol BS1 4ND (GB)**
• **Bian, Yan Qing**
**Bristol BS1 4ND (GB)**

(74) Representative: **Round, Edward Mark**
**Marks & Clerk**
**90 Long Acre**
**London WC2E 9RA (GB)**

(54) **Interference cancellation in a CDMA receiver**

(57)    A receiver (52) for receiving a CDMA signal comprises a common channel interference cancellation facility (72) operable to cancel common channel interference by applying a common channel interference estimate to the received signal through a weighted hybrid of parallel and serial interference cancellation, and a physical channel self-interference cancellation facility (76) operable to cancel physical channel self-interference by applying an interference estimate to the received signal through a weighted hybrid of parallel and serial interference cancellation.

FIGURE 5

EP 1 569 355 A2

**Description**

The invention generally relates to a receiver in a communications system for reducing the impact of interference in a spread spectrum communications system, and a method of bringing about the same. The invention has applications in digital mobile communications systems, especially third generation (3G) systems.

Third generation mobile phone networks use CDMA (Code Division Multiple Access) spread spectrum signals for communicating across the radio interface between a mobile station and a base station. These 3G networks, (and also so-called 2.5G networks), are encompassed by the International Mobile Telecommunications IMT-2000 standard (http://www.itu.int/, hereby incorporated by reference). Third generation technology uses CDMA (Code Division Multiple Access) and the IMT-2000 standard contemplates three main modes of operation, W-CDMA (Wide band CDMA) direct spread FDD (Frequency Division Duplex) in Europe and Japan, CDMA-2000 multicarrier FDD for the USA, and TD-CDMA (Time Division Duplex CDMA) and TD-SCDMA (Time Division Synchronous CDMA) for China.

Collectively, the radio access portion of a 3G network is referred to as UTRAN (Universal Terrestrial Radio Access Network) and a network, comprising UTRAN access networks, is known as a UMTS (Universal Mobile Telecommunications System) network. The UMTS system is the subject of standards produced by the Third Generation Partnership Project (3GPP, 3GPP2), technical specifications for which can be found at www.3gpp.org. These standards include Technical Specifications 23.101 (version 4.0.0), which describes a general UMTS architecture, and 25.101 (version 3.2.2), which describes user and radio transmission and reception (FDD), which are hereby incorporated by reference.

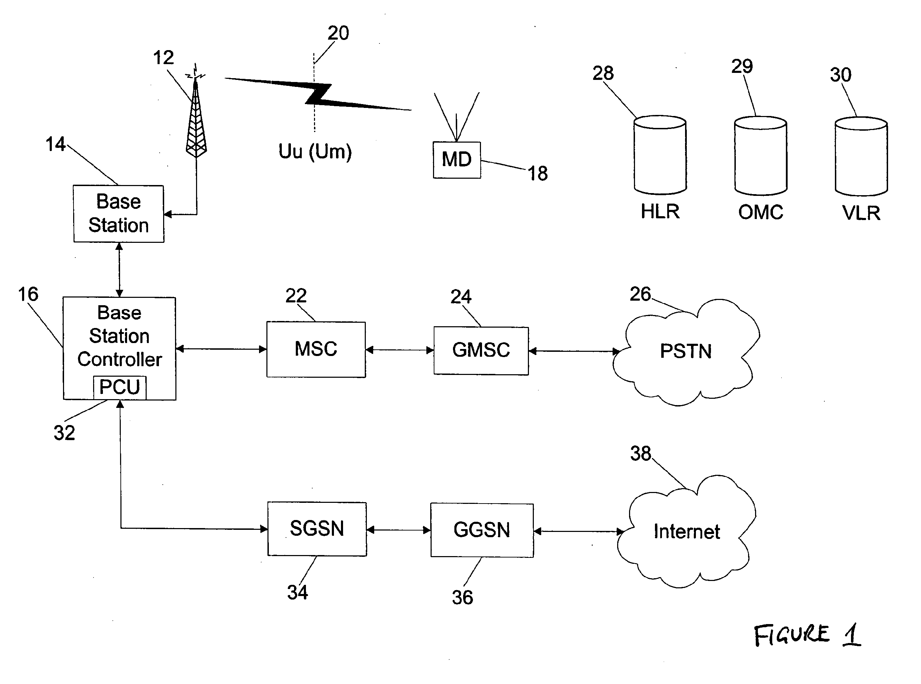

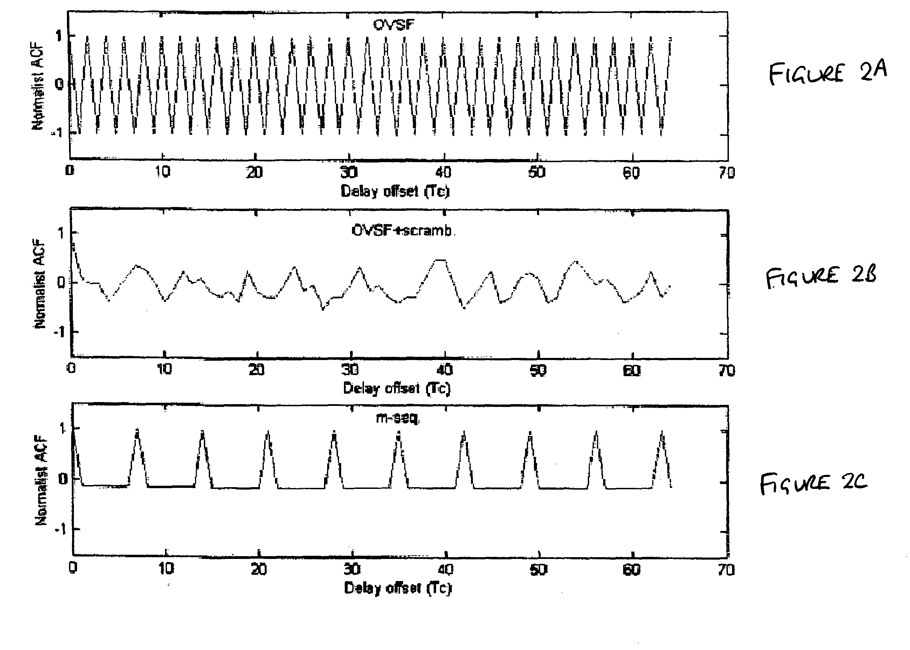

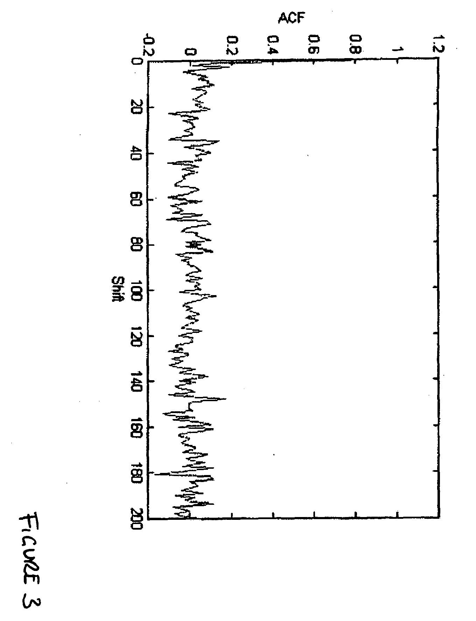

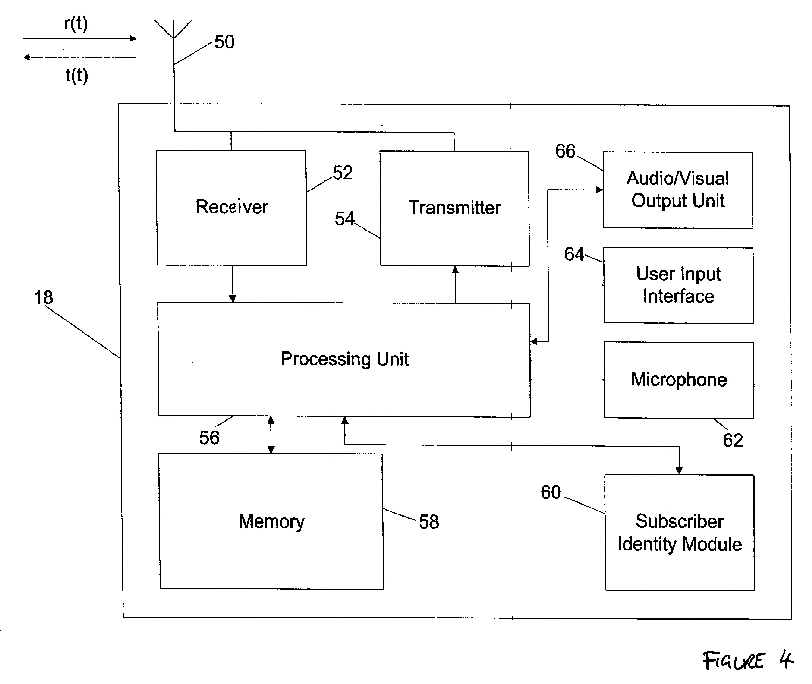

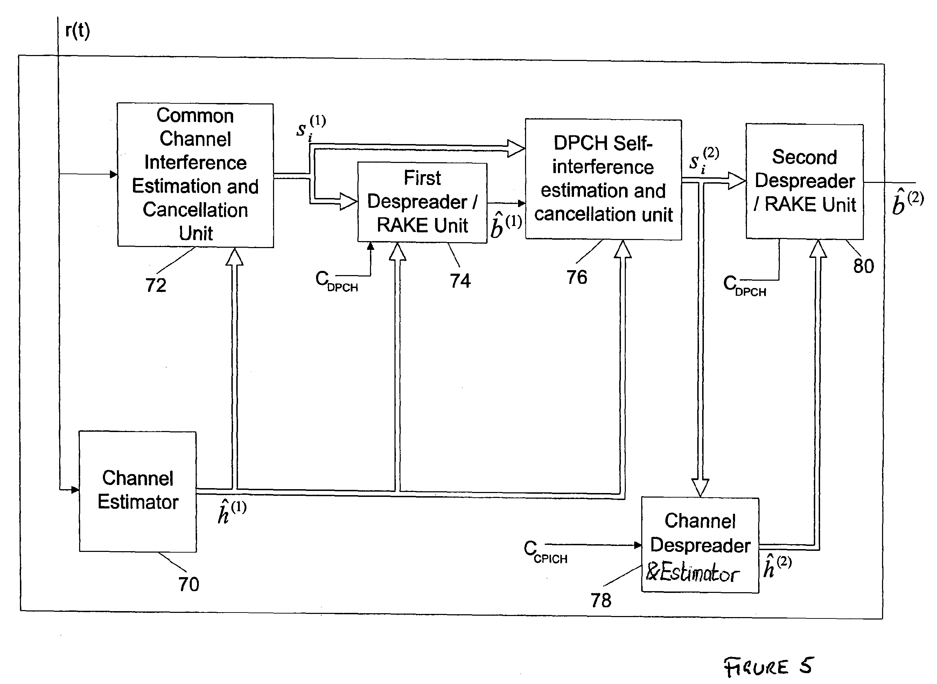

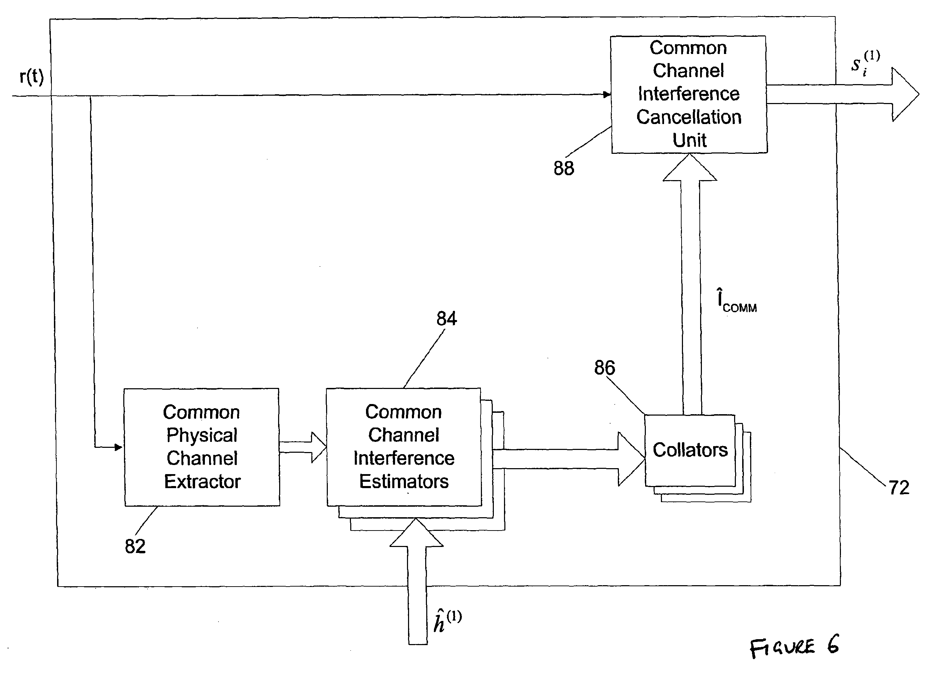

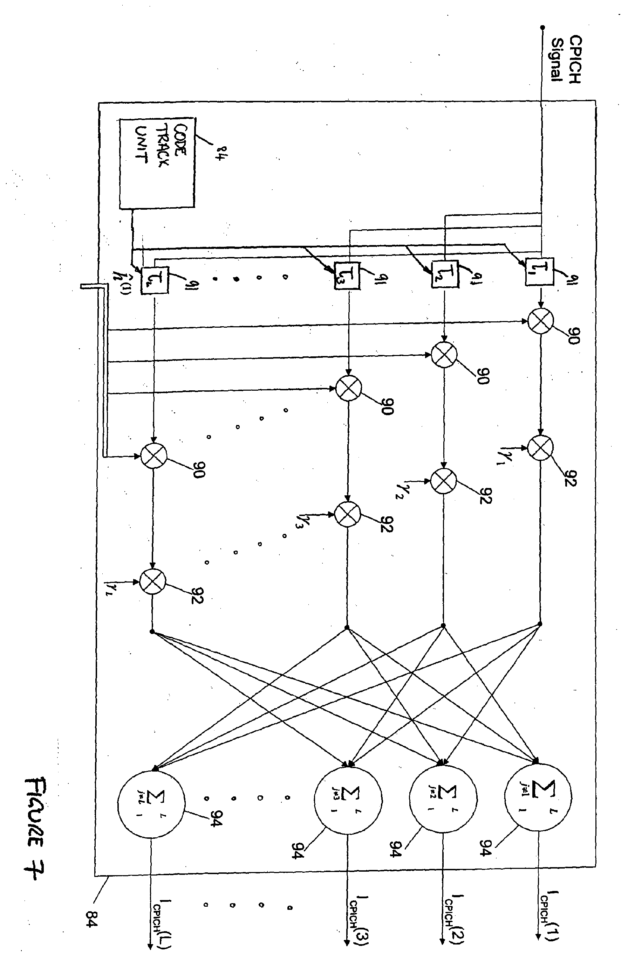

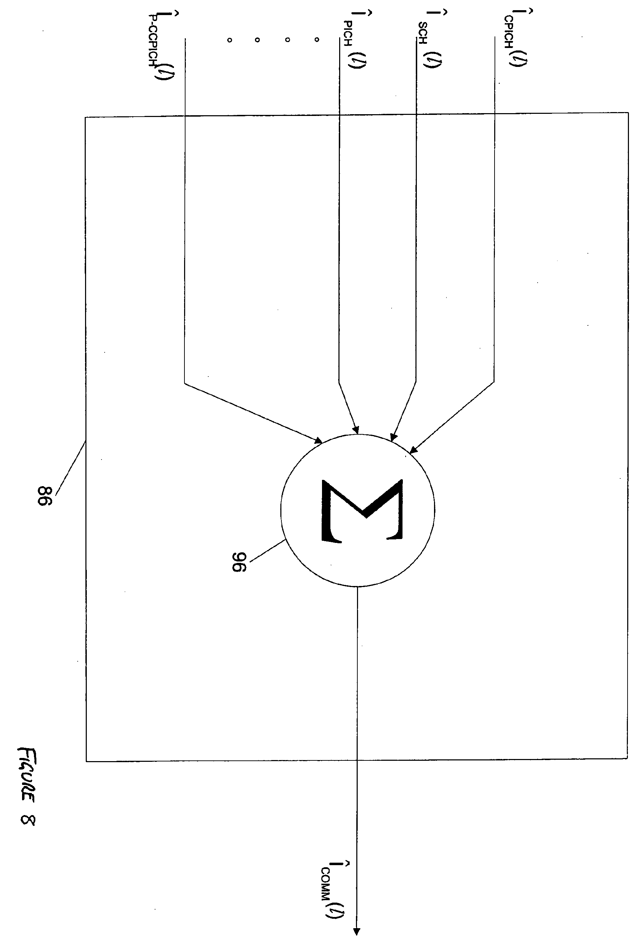

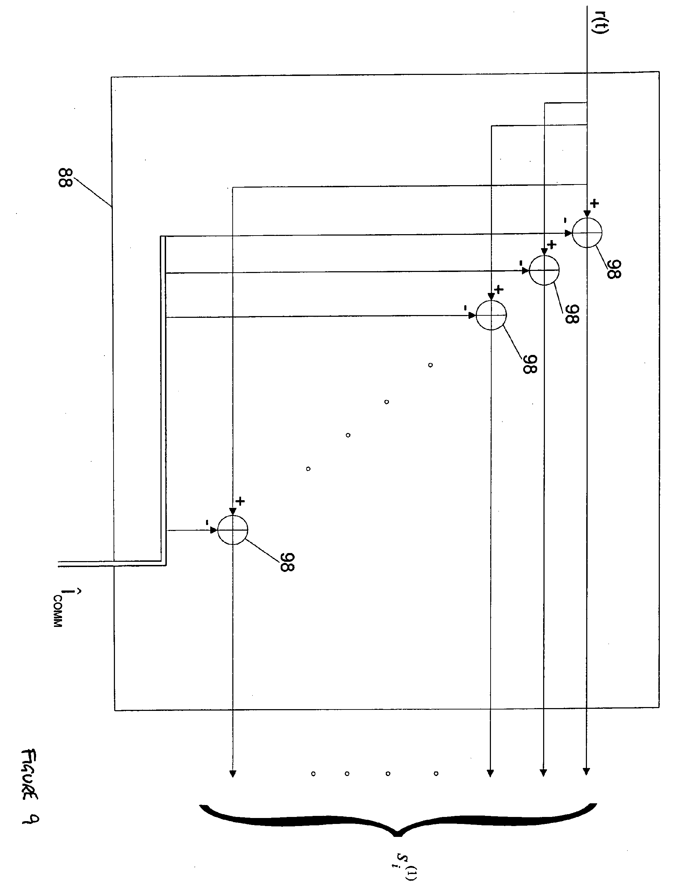

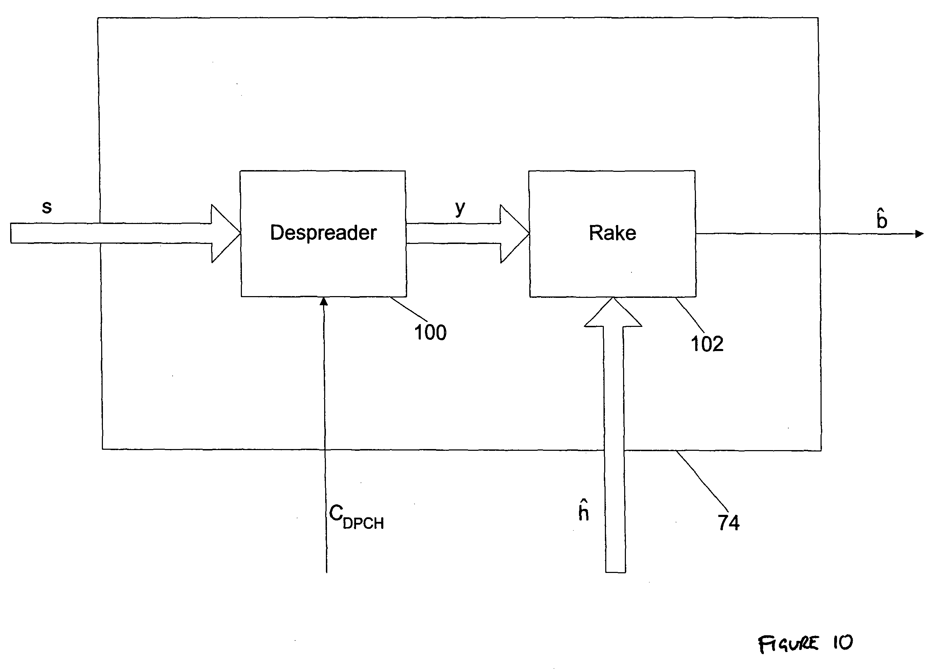

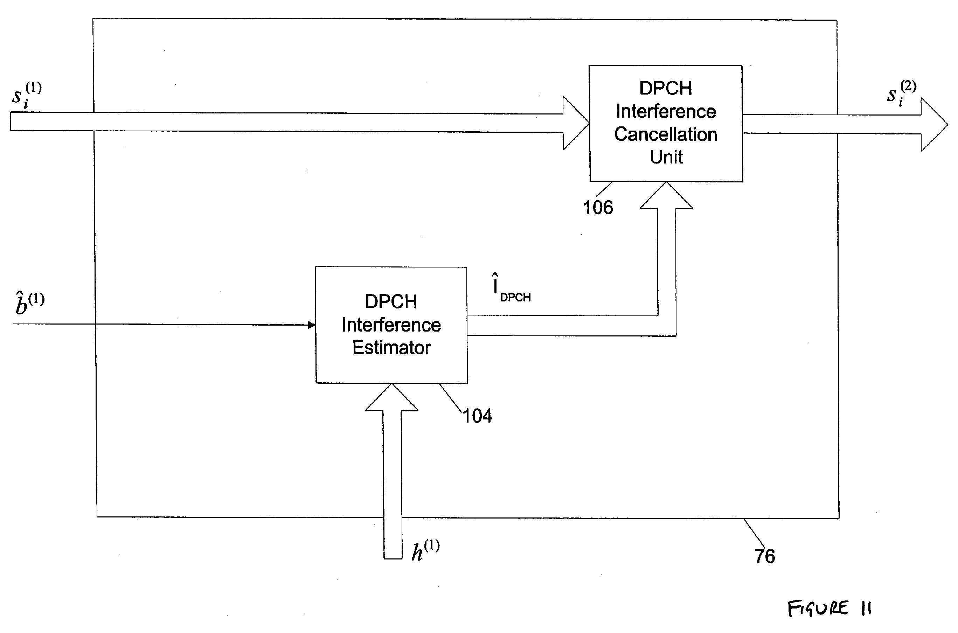

Figure 1 shows a generic structure of a third generation digital mobile communications system at 10. In Figure 1 a radio mast 12 is coupled to a base station 14, which in turn is controlled by a base station controller 16. A mobile communications device 18 is shown in two-way communication with base station 14 across a radio or air interface 20, known as a Um interface in GSM (Global Systems for Mobile Communications) networks and GPRS (General Packet Radio Service) networks and a Uu interface in CDMA2000 and W-CDMA networks. Typically, at any one time, a plurality of mobile devices 18 are attached to a given base station, which includes a plurality of radio transceivers to serve these devices.

Base station controller 16 is coupled, together with a plurality of other base station controllers (not shown), to a mobile switching centre (MSC) 22. A plurality of such MSCs are in turn coupled to a gateway MSC (GMSC) 24 which connects the mobile phone network to the public switched telephone network (PSTN) 26. A home location register (HLR) 28 and a visitor location register (VLR) 30 manage call routing and roaming and other systems (not shown) manage authentication and billing. An operation and maintenance centre (OMC) 29 collects the statistics from network infrastructure elements such as base stations and switches, to provide network operators with a high level view of network performance. The OMC can be used, for example, to determine how much of the available capacity of the network or parts of the network is being used at different times of day. This can allow for more effective management of available network resources.

The network infrastructure described above manages circuit switched voice connections between a mobile communications device 18 and other mobile devices and/or PSTN 26. So-called 2.5G networks such as GPRS, and 3G networks, are capable of managing packet data services in addition to circuit switched voice services. In such networks, in general terms, a packet control unit (PCU) 32 is added to the base station controller 16 and this is connected to a packet data network such as Internet 38 by means of a hierarchical series of switches. In a GSM-based network these comprise a serving GPRS support node (SGSN) 34 and a gateway GPRS support node (GGSN) 36. It will be appreciated that both in the system of Figure 1 and in the system described later the functionalities of elements within the network may reside on a single physical node or on separate physical nodes of the system.

Communications between the mobile device 18 and the network infrastructure generally include both data and control signals. The data may comprise digitally encoded voice data or a data modem may be employed to transparently communicate data to and from the mobile device. In a GSM-type network text and other low-bandwidth data may also be sent using the GSM Short Message Service (SMS).

In a 2.5G or 3G network mobile device 18 may provide more than a simple voice connection to another phone. For example mobile device 18 may additionally or alternatively provide access to video and/or multimedia data services, web browsing, e-mail and other data services. Logically, mobile device 18 may be considered to comprise a mobile terminal (incorporating a subscriber identity module (SIM) card) with a serial connection to terminal equipment such as a data processor or personal computer. Generally once the mobile device has established connection to the network it is "always on" and user data can be transferred transparently between the device and an external data network, for example by means of standard AT commands at the mobile terminal-terminal equipment interface. Where the mobile device 18 comprises a conventional mobile telephone, a terminal adapter may be required. This terminal adapter could comprise a GSM data card.

In a CDMA spread spectrum communication system a baseband signal is spread by mixing it with a pseudorandom spreading sequence of a much higher bit rate (referred to as the chip rate) before modulating the radio frequency (RF) carrier. At the receiver, the baseband signal is recovered by feeding the received signal and the pseudorandom spreading sequence into a correlator, and allowing one to slip past the other until a lock is obtained. Once code lock has been obtained, it is maintained by means of a code tracking loop such as an early-late tracking loop which detects when the input signal is early or late with respect to the spreading sequence and compensates for the change.

Such a system is described as code division multiplexed as the baseband signal can only be recovered if the initial pseudorandom spreading sequence is known. A spread spectrum communication system allows many transmitters with different spreading sequences all to use the same part of the RF spectrum, a receiver "tuning" to the desired signal by selecting the appropriate spreading sequence.

The spreading code does not change the signal bandwidth but allows signals to or from different users to be distinguished from one another, again, because the spreading codes are substantially mutually orthogonal. Scrambling is used as well as channelisation spreading, that is a signal at the chip rate following OVSF spreading is multiplied by the scrambling code to produce a scrambled code at the same chip rate. The scrambling code is a cell specified code. All users in the same cell have the same scrambling code, they are only distinguished by their unique OVSF code. The chip rate is thus determined by the channelisation code and, in this system, is unaffected by the subsequent scrambling. Thus the symbol rate for a given chip rate is likewise unaffected by the scrambling.

In a 3G mobile phone system different spreading factors and scrambling code links are generally employed for the down link from the base station to the mobile station and for the up link from the mobile station to the base station. Typically the channelisation codes have a length of between 4 chips and 256 chips or, equivalently, a spreading factor of between 4 and 256 (although other spreading factors may be employed). The up link and down link radio frames generally last 10ms, corresponding to a scrambling code length of 38400 chips although shorter frames, for example of 256 chips, are sometimes employed on the up link. A typical chip rate is 3.84 M chips/sec (Mcps), which determines the maximum bit rate for a channel - for example with a spreading factor of 16, that is 16 chips per symbol, this gives a data rate of 240 Kbps. It will be recognised that the foregoing figures are provided merely for the purposes of illustration.

OVSF codes are defined using the code tree published in the 3GPP specification referenced above, and they are uniquely identified as $C_{ch,SF,q}$ where SF is the spreading factor of the code and q is the code number where:

$$0 \leq q \leq SF\text{-}1$$

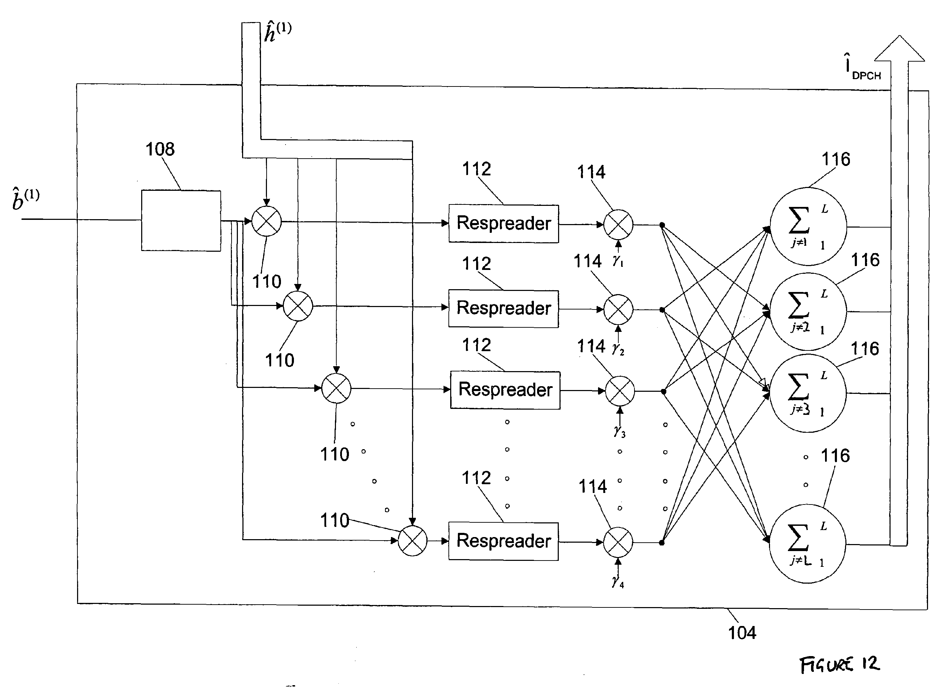

Figures 2a, 2b and 2c illustrate a comparison of ACF for the OVSF code $C_{ch,8,4,}$ (Figure 2a) with a situation where a scramble code is used (Figure 2b), and with a maximal sequence (m-sequence) (Figure 2c), such that:

$$C_{ch,8,4} = [1, -1, 1, -1, 1, -1, 1, -1],$$

and
m=7.

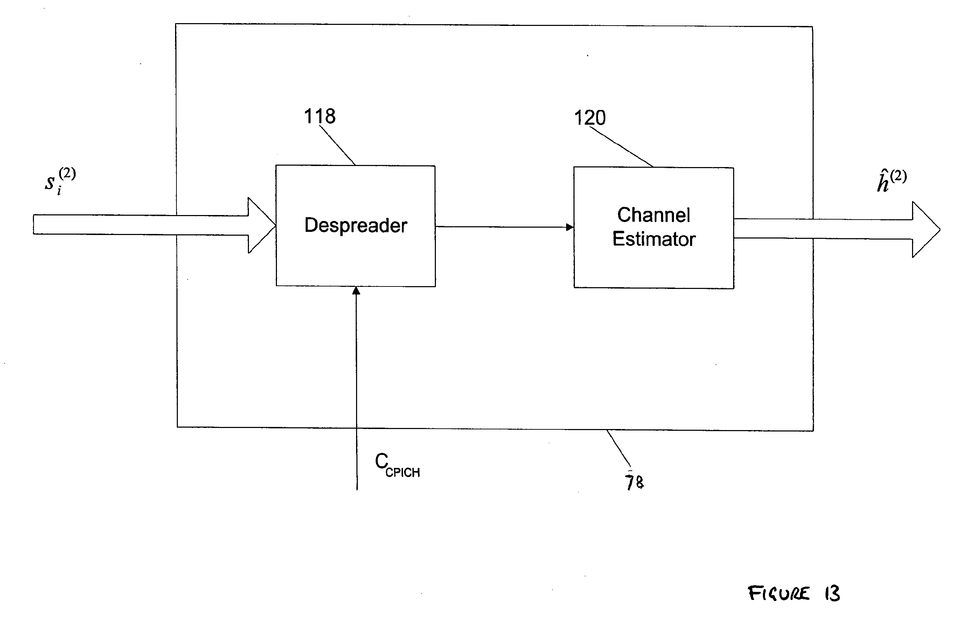

Compared to the m-sequence, the OVSF codes have poor ACF (Figure 2a). After applying a scramble code, the ACF is improved (Figure 2b), but not identical to each symbol, and thus remains unsatisfactory for system performance. The imperfect spreading code with non-zero ACF will result in inter-path interference (IPI) when multipath propagation is effected. In general, it is possible to reduce IPI to a level that, on average, is inversely proportional to SF. To illustrate this, Figure 3 shows the ACF for the spreading code $C_{ch,128,4}$ where the SF=128.

Where higher bit rate communications with a mobile station are required, more than one such channel may be employed to create a so-called multicode transmission. In a multicode transmission a plurality of data channels are used, effectively in parallel, to increase the overall rate of data transmission to or from a mobile station. Generally the multicode data channels have the same scrambling code but different channelisation codes, albeit preferably with the same spreading factor.

In a 3G mobile telephony system a number of channels are used for communication. Some of these are dedicated to particular users, while others are common to groups of users, such as all users within a given cell or sector.

Traffic is carried on a Dedicated Physical Control Channel (DPCH), or on a plurality of such channels in the case of a multicode transmission, as described above. The common channels generally transport signalling and control information and may also be utilised for the physical layer of the system's radio link. A Common Pilot Channel (CPICH) is provided comprising an unmodulated code channel scrambled with a cell-specific scrambling code to allow channel estimation and equalisation at the mobile station receiver.

Similarly, a Synchronisation Channel (SCH) is provided for use by the mobile station to locate network cells. A primary SCH (PSCH) is unmodulated and is transmitted using the same channelisation spreading sequence in each cell. The PSCH does not employ a cell-specific scrambling code. A similar secondary SCH (SSCH) is also provided, but with a limited number of spreading sequences. Primary and Secondary Common Control Physical Channels (PCCPCH, SCCPCH), having known channelisation and spreading codes, are also provided to carry control information.

The signalling channels noted above (CPICH, SCH and CCPCH) must be decoded by each mobile station and thus the spreading codes (channelisation codes and where appropriate, scrambling code) will be known by the mobile station, for example because the known codes for a network have been stored in the user-end equipment to enable compatibility of the user-end equipment for use with the network.

In this description, hereafter, references to channels are generally references to physical channels and one or more network transport channels may be mapped to such a physical channel. In the context of 3G mobile phone networks the mobile station or mobile device is often referred to as a terminal and in this specification no distinction is drawn between these general terms.

Because of the imperfect ACF and cross-correlation function of code spreading and the existence of multipath, these common channels will cause inter-channel interference (ICI), in addition to the previously noted IPI. IPI and ICI degrade the signal to interference-plus-noise ratio (SINR) of the received signal, which will directly affect the output of the de-spreading process.

One advantage of spread spectrum systems is that they are relatively insensitive to multipath fading. Multipath fading arises when a signal from a transmitter to a receiver takes two or more different paths and hence two or more versions of the signals arrive at the receiver at different times and interfere with one another. This could arise through interactions of the signal with buildings and/or terrain between the transmitter and the receiver. This typically produces a comb-like frequency response and, when a wide band signal is received over a multipath channel, the multiple delays give the multiple components of the received signal the appearance of tines of a rake. The number and position of multipath channels generally changes over time, particularly when the transmitter or receiver is moving. However, as the skilled person will understand, a correlator in a spread spectrum receiver will tend to lock onto one of the multipath components, normally the direct signal which is the strongest.

As is known in the art, a plurality of correlators may be provided to allow the spread spectrum receiver to lock onto a corresponding plurality of separate multipath components of the received signal. Such a spread spectrum receiver is known as a rake receiver and the elements of the receiver comprising the correlators are often referred to as "fingers" of the rake receiver. The separate outputs from each finger of the rake receiver are combined to provide an improved signal to noise ratio (or bit error rate) generally either by weighting each output equally or by estimating weights which maximise the signal to noise ratio of the combined output. This latter technique is known as Maximal Ratio Combining (MRC).

There is a general need to provide a user-end terminal capable of supporting the higher data rates possible in 3G systems, particularly in areas with large numbers of users of mobile devices. It is generally considered that a CDMA system is uplink-limited due to the near-far effect (where the correlation with a strong, nearby signal having an incorrect code is greater than that with a weaker, more distant signal with the correct code). However a 3G CDMA system may instead be limited by the downlink capacity due to the highly asymmetric services that are envisaged, such as the download of web page and image data from the Internet. Thus there is a general need for a mobile terminal which can support such higher rate downlink data services.

To facilitate the support of higher data rate services it is known to employ Multiple Access Interference (MAI) suppression at the base station to improve the uplink. MAI arises because the spreading codes of signals received from different users are not normally completely orthogonal. Interference cancellation (IC) receivers in the base station thus attempt to estimate a MAI component, which is subtracted from the received signal, either in parallel across all of the users or sequentially. The cancelled MAI is the interference between corresponding multipath components of two substantially orthogonal received signals. This technique is described in more detail in Section 11.5.2 of "WCDMA for UMTS by H Holma and A Toskala, John Wiley & Sons, 2001" (ISBNO 741 48687 6).

A technique for suppressing interference between different multipath components of a single data channel, that is for suppressing Interpath Self-interference (IPI), has also been described in a paper by NTT Docomo, "Multipath Interference Canceller (MPIC) for HSDPA and Effect of 64QAM Data Modulation" (TSG RAN WG)1 Meeting #18, document (01) 0102 available from the 3GPP website at

http://www.3gppp.ors/ftp/tsg ran/wg1 r11/tsgr1 18/docs/pdfs/r1-01-0102.pdf).

However, W-CDMA systems are interference limited, in that a maximum number of users exists, which is determined by the ability of users to communicate simultaneously over multipath fading channels. This problem is common to both dense urban and indoor environments. It has thus been desired to provide a mobile communications system employing W-CDMA, in which a receiver is operable to receive a signal and is capable of processing the signal with reduced vulnerability to multipath fading.

Conventionally, a Rake receiver is employed at a receiver of such a system, to resolve individual multipath components from the received signal and to provide multipath diversity reception. Estimated channel coefficients are used for Rake Maximal Ratio Combining (MRC).

However, a conventional Rake receiver can only support a single user, and lacks the ability to subtract inter-path interference (IPI) and inter-channel interference (ICI) for a practical multipath environment. It is widely desired that more accurate channel estimation than is currently available should be provided.

Interference, such as IPI and ICI noted above, contributes to the reduction of the Signal to Interference and Noise Ratio (SINR) on fingers of a Rake receiver. Interference cancellation (IC) is thus provided in a receiver in a W-CDMA system. IC relies upon estimating the interference contribution separately based on accurate knowledge of the channel concerned, from which the overall interference can be determined and subtracted.

Two most generally encountered IC techniques are serial interference cancellation (SIC) and parallel interference cancellation (PIC). These are widely known in the art.

Various problems are exhibited in conventional IC. In particular, the technology is not universally applicable, being most appropriate for use in a base station of a system. Further, imperfectly applied IC can run the risk of significantly reducing or even reversing the performance gains to be had from IC properly applied.

"Improved parallel interference cancellation for CDMA" (Divsalar, D.D., Simon, M.K., Raphaeli, D., IEEE Trans. Commun. Vol. 46, No. 2, Feb. 1998, pp 258-268) describes IC involving partial weighting, to overcome problems with poor channel estimation and consequent miscalculation of accurate interference replicas and adverse IC operation. For such a case, it is proposed in that disclosure to abstract partially, rather than attempt to cancel completely, the amount of estimated interference.

However, although an improved partial weighted IC is proposed in that document to overcome imperfect channel estimation, the IC in that case is always performed with a constant weighting factor, regardless of the presence or otherwise of deep fading in the channel. In fact, the interference contribution at each symbol is not the same in a fading channel to channel estimation is commonly poor when SINR is relatively low.

Further, interference replicas for multi-stage IC also require reliable re-spreading, and all ICI and IPI are reconstructed in this process in parallel. Thus, besides channel estimation, IC remains extremely sensitive to decision error probability at earlier stages of the IC process.

Channel estimation can be obtained from a simple Multi-symbol Average (MSA) algorithm, which averages estimated channel response over a predetermined period. Conventional MSA channel estimation presents certain problems. In particular, MSA requires a significant period of time over which the averaging process operates. This introduces substantial delay in a system employing such a process for channel estimation. Further, conventional MSA can only mitigate, rather than eliminate, the effect of average white Gaussian noise (AWGN). The reliability of MSA channel estimation can be substantially degraded while the system can encounter interference of various types, for example multi-path interference (MPI) and multi-user interference (MUI).

It would be desirable to be able to provide a system providing effective cancellation of both inter-path interference (IPI) and inter-channel interference (ICI), and an efficient interference cancellation gain. This will also help to improve the signal to interference plus noise ratio (SINR) on each Rake finger of a Rake receiver, and more accurately detect multipath diversity for the Rake receiver.

A first aspect of the invention provides apparatus for receiving a CDMA signal, comprising means for cancelling common channel interference and physical channel self-interference, both on the basis of channel estimates and both through applying said estimates through a weighted hybrid of parallel and series cancellation.

A second aspect of the invention provides apparatus for receiving a CDMA signal, comprising means for deriving a first channel estimate from said received signal, for configuring a common channel interference cancellation means to cancel common channel interference, and means for deriving a second channel estimate for provision to additional interference cancellation means for cancelling physical self-interference.

A third aspect of the invention provides a receiver for receiving a CDMA signal comprising common channel interference cancellation means operable to cancel common channel interference by applying a common channel interference estimate to the received signal through a weighted hybrid of parallel and serial interference cancellation, and physical channel self-interference cancellation means operable to cancel physical channel self-interference by applying an interference estimate to the received signal through a weighted hybrid of parallel and serial interference cancellation.

Preferably, the receiver comprises initial channel estimation means operable to generate a plurality of estimates of multipath components of the received signal for use by said common channel interference cancellation means for determining an initial channel estimate comprising a plurality of multipath components of said received signal.

Further, multipath realignment means may be provided operable to align the multipath components of the received signal into a coherent received signal for use by the physical channel self-interference cancellation means.

The multipath realignment means is, in a preferred embodiment of the invention, a rake receiver.

In a preferred embodiment of the invention, additional channel estimation means is provided for determining an additional channel estimate. In this case, the additional channel estimate preferably comprises a plurality of multipath components of the signal after common channel interference cancellation and physical channel self-interference cancellation.

In a preferred embodiment, additional multipath realignment means is provided, operable to align multipath components of the signal after common channel interference cancellation and physical channel self-interference cancellation. The additional channel estimate is, in this embodiment, suitable for use, selectively or otherwise, with the additional multipath realignment means to align the multipath components of the signal after common channel interference cancellation and physical channel self-interference cancellation, with reference to one of the initial and additional channel estimates.

The determination of which of the initial and additional channel estimates to be used with the additional multipath realignment means can be made in a predetermined manner, or alternatively decision means can be provided to determine, on the basis of predetermined criteria, which of the channel estimates is most suitable for use in specific circumstances.

In one embodiment, the additional multipath realignment means may be a rake receiver.

In one embodiment of the invention, channel estimate selection means is provided for selecting one or other of the initial channel estimate and the additional channel estimate, for use in the common channel interference cancellation means.

In another embodiment of the invention, channel estimate selection means is provided for selecting one or other of the initial channel estimate and the additional channel estimate, for use in the initial multipath realignment means.

In still another embodiment of the invention, channel estimate selection means is provided for selecting one or other of the initial channel estimate and the additional channel estimate, for use in the physical channel self-interference cancellation means.

In still another embodiment of the invention, channel estimate selection means is provided for selecting one or other of the initial channel estimate and the additional channel estimate, for use in the additional multipath realignment means.

The channel estimate selection means may be operable to compare the initial channel estimate and the additional channel estimate and, on the basis of a measurable condition, to select one or other of the estimates for use.

The channel estimate selection means comprises, in a preferred embodiment of the invention, measurable condition determining means for determining a measure of interference and noise in each said channel estimate, and comparison means for comparing said measurements, and is operable to select the channel estimate on the basis of the result of comparison.

The measure determined by said determining means may, in one embodiment of the invention, comprise a ratio of signal to interference-plus-noise (SINR).

According to another aspect of the invention, a method of processing a CDMA signal, to reduce the effect of interference on said signal, includes cancelling common channel interference by applying a common channel interference estimate to the received signal through a weighted hybrid of parallel and serial common channel interference cancellation, and cancelling physical channel self-interference by applying an interference estimate to the received signal through a weighted hybrid of parallel and serial physical channel self-interference cancellation.

In a preferred embodiment, the method described above further comprises the steps of generating a plurality of estimates of multipath components of the received signal, for use in the common channel interference cancellation step, determining an initial channel estimate comprising a plurality of multipath components of the received signal, and aligning the multipath components of the received signal into a coherent received signal for use in the physical channel self-interference cancellation step.

The method may include the step of providing a rake receiver and the multipath realignment step may be performed in the rake receiver.

An additional channel estimation step may be provided. This step may include determining an additional channel estimate comprising a plurality of multipath components of the signal after performance of the common channel interference cancellation step and the physical channel self-interference cancellation step.

The resultant additional channel estimate may be used for performance, selectively or otherwise, with an additional multipath realignment step of aligning multipath components of the signal after performance of the common channel interference cancellation step and the physical channel self-interference cancellation step with reference to one of the initial and additional channel estimates.

The method preferably includes the step of providing an additional rake receiver. The additional multipath realignment step may be performed in the additional rake receiver.

In one alternative embodiment of the invention, the method further comprises the step of selecting one or other of the initial channel estimate and the additional channel estimate, for use in the common channel interference cancellation means.

In another alternative embodiment of the invention, the method further comprises the step of selecting one or other of the initial channel estimate and the additional channel estimate, for use in the initial multipath realignment means.

In still another alternative embodiment of the invention, the method further comprises the step of selecting one or other of the initial channel estimate and the additional channel estimate, for use in the physical channel self-interference cancellation means.

In still another alternative embodiment of the invention, the method further comprises the step of selecting one or other of the initial channel estimate and the additional channel estimate, for use in the additional multipath realignment means.

In any of the above alternative embodiments of the invention, the selection step may comprise comparing the initial channel estimate and the additional channel estimate and, on the basis of a measurable condition, selecting one or other of said estimates for use.

The selection step may, in a preferred embodiment of the invention, comprise determining a measure of interference and noise in each said channel estimate, comparing the measurements, and selecting the channel estimate on the basis of the result of comparison.

The measure, determined in the determining step, may comprise a ratio of the magnitude of signal strength to the magnitude of interference-plus-noise. Alternatively the measure may be a function of, and thus an indication of, the ratio of the magnitude of signal strength to the magnitude of interference-plus-noise.

According to another aspect of the invention, a method of processing a CDMA signal, to reduce the effect of interference on said signal, includes cancelling common channel interference by applying a common channel interference estimate to the received signal, and cancelling physical channel self-interference by applying an interference estimate to the received signal, wherein at least one of the acts of cancelling involves a weighted hybrid of parallel and serial cancellation.

According to still a further aspect of the invention there is provided a receiver for receiving a CDMA signal, the receiver comprising means for deriving a first channel estimate from the received signal, means for cancelling common channel interference from the received signal, means for deriving a second channel estimate from the received signal after cancellation of common channel interference, and means for cancelling physical channel self-interference in the common channel interference cancelled signal.

According to yet another aspect of the invention, there is provided a method of processing a CDMA signal, to reduce the effect of interference on said signal, comprising deriving a first channel estimate from the received signal, cancelling common channel interference from said received signal, deriving a second channel estimate from said received signal after cancellation of common channel interference, and cancelling physical channel self-interference in said common channel interference cancelled signal.

Specific embodiments of the present invention will now be described in detail, and in conjunction with the accompanying drawings, wherein:

Figure 1 is a diagram, described above, illustrating a communications system including a mobile telephone;

Figure 2a is a graph, described above, illustrating an autocorrelation function for a receiver in the system illustrated in Figure 1 for an OVSF coded signal;

Figure 2b is a graph, described above, illustrating an autocorrelation function for a receiver in the system illustrated in Figure 1, for an OVSF coded signal and scrambling applied thereto;

Figure 2c is a graph, described above, illustrating an autocorrelation function for a maximal sequence as comparison for the graphs of Figures 2a and 2b;

Figure 3 is a graph, described above, illustrating autocorrelation of OVSF and scrambling with a large spreading factor;

Figure 4 is a diagram illustrating a mobile telephone unit including a receiver in accordance with a first embodiment of the invention;

Figure 5 is a schematic diagram illustrating, in more detail, the receiver shown in Figure 4;

Figure 6 is a schematic diagram illustrating a common channel interference estimation and cancellation unit of the receiver illustrated in Figure 5;

Figure 7 is a schematic diagram illustrating a common channel interference estimator of the common channel interference estimation and cancellation unit illustrated in Figure 6;

Figure 8 is a schematic diagram of a collator of the common channel interference estimation and cancellation unit illustrated in Figure 6;

Figure 9 is a schematic diagram of a common channel interference cancellation unit of the common channel interference estimation and cancellation unit illustrated in Figure 6;

Figure 10 is a schematic diagram of a first despreader/rake unit of the receiver illustrated in Figure 5;

Figure 11 is a schematic diagram of a DPCH self-interference estimation and cancellation unit of the receiver illustrated in Figure 5;

Figure 12 is a schematic diagram of a DPCH interference estimator of the DPCH self-interference estimation and cancellation unit illustrated in Figure 11;

Figure 13 is a schematic diagram of a channel despreader/estimator of the receiver illustrated in Figure 5;

Figure 14 is a schematic diagram illustrating a receiver according to a second embodiment of the invention, for interchange with the receiver illustrated in figure 5 in the mobile telephone unit illustrated in figure 4;

Figure 15 is a schematic diagram of a common channel interference estimation and cancellation unit of the receiver illustrated in Figure 14;

Figure 16 is a schematic diagram illustrating a DPCH self-interference estimation and cancellation unit of the receiver illustrated in Figure 14;

Figure 17 is a schematic diagram illustrating a receiver according to a third specific embodiment of the invention, for interchange with the receiver illustrated in figure 5 in the mobile telephone unit illustrated in figure 4;

Figure 18 is a schematic diagram illustrating a receiver according to a fourth specific embodiment of the invention, for interchange with the receiver illustrated in figure 5 in the mobile telephone unit illustrated in figure 4; and

Figure 19 is a schematic diagram illustrating a channel estimation quality evaluator of a receiver of the second, third or fourth embodiments of the invention, as illustrated in Figures 14, 17, or 18 respectively.

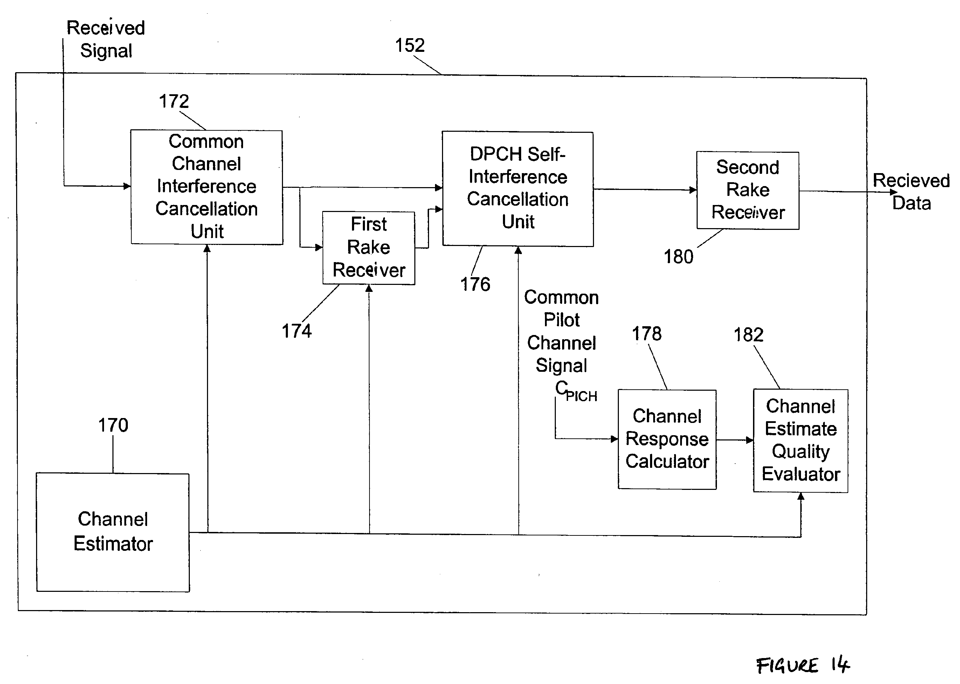

Figure 4 illustrates a mobile telephone 18, for illustration of specific embodiments of the invention. The various components of a mobile phone terminal will be known to a person skilled in the art; that shown in Figure 4 is of generally conventional construction, configured in accordance with the specific embodiments by appropriate application specific hardware, and/or software stored in memory means.

As shown in Figure 4, the mobile telephone 18 comprises an antenna for detecting a wireless communications transmission and converting it into a received signal $r(t)$. A receiver 52 is operable to receive the received signal $r(t)$ detected by the antenna, and a transmitter 54 is operable to send signals via the antenna 50 to other devices in the network 10.

A processing unit 56 is operable to receive data extracted from received signals by the receiver 52, and to send data, for transmission, to the transmitter 54. The processing unit 56 can be of conventional construction, or in part designed as an application specific component, and as such is configured by data and program instructions stored in a memory 58. The processing unit is operable to send output information to an audiovisual output unit 66, which is capable of presenting information to a user, in the form of audio and visual display output. A user input interface 64 is capable of receiving user input actions and converting these into signals for receipt by the processing unit 56. Additionally, a microphone 62 is operable to convert audible signals, such as from a user, into data for transmission to the processing unit 24. A subscriber identity module (SIM) 60 is removably placed in the mobile telephone 18, and is also in communication with the processing unit 56. The SIM 60 is capable of storing account and other user specific information for configuration of the mobile telephone 18.

Figure 5 illustrates in further detail the receiver 52. The receiver 52 comprises a channel estimator which is operable to receive the received signal $r(t)$ and to determine an initial channel estimate $h^{(1)}$, comprising a plurality of complex valued channel coefficients $h_\ell^{(1)}$ for each identified multipath $l$ in the received signal $r(t)$.

A common channel interference estimation and cancellation unit 72 is operable to receive the received signal $r(t)$, together with the initial channel estimate $h^{(1)}$, firstly to determine a common channel interference estimate, comprising estimates for interference from each of the common channels identified for the communications system, and secondly to apply this common channel interference estimate to the received signal to generate a series of common channel interference cancelled received signals, which are then combined into a CCIC output vector $s_i^{(1)}$.

A first despreader/rake unit 74 is operable to receive this CCIC output vector $s_i^{(1)}$, together with the channel estimate $h^{(1)}$ to produce initial estimated values $b^{(1)}$. The initial estimated value $b^{(1)}$ is derived from despreading the CCIC output vector with a DPCH spreading code $C_{DPCH}$, passing the resultant despread data through a rake.

A DPCH self-interference estimation and cancellation unit 76 receives the initial estimated value $s_i^{(1)}$, together with the CCIC output vector $s_i^{(1)}$, and estimates on the basis of the channel estimate $s_i^{(1)}$ a DPCH self-interference estimate and applies that estimate to the CCIC output vector $s_i^{(1)}$ to generate a DPCH output vector $s_i^{(2)}$.

The DPCH output vector $s_i^{(2)}$ is then applied to a second despreader/rake unit 80, and to a channel despreader/estimator 78. The channel despreader/estimator 78 determines a second channel estimate $h^{(2)}$ on the basis of the common pilot channel spreading code $C_{CPICH}$ and passes that second channel estimate to the second despreader/rake unit 80 which despreads the DPCH output vector $s_i^{(2)}$ with reference to the DPCH spreading code $C_{DPCH}$ and then applies a rake to the resultant despread vector with reference to the second channel estimate $h^{(2)}$. The second despread/rake unit 80 then outputs a final data stream $b^{(2)}$ to the processing unit 56.

The common interference estimation and cancellation unit 72 is illustrated in further detail in Figure 6. The common interference estimation and cancellation unit 72 comprises a common physical channel extractor 82, which receives the received signal $r(t)$ and extracts the previously mentioned common physical channels for a parallel output. The common physical channels are then passed in parallel to a series of common channel interference estimators 84, each of which is operable to receive a common physical channel and to produce, on the basis of that common physical channel, and the first channel estimate $h^{(1)}$, a series of signals representing a common channel interference estimate for that common physical channel. The plurality of common channel interference estimates is then passed to a series of collators 86 which are operable to collate the various common channel interference estimates into a series of interference estimates $\hat{I}_{COMM}$ which are then passed to a common channel interference cancellation unit 88. The common channel interference cancellation unit cancels interference, on the basis of the interference estimates $\hat{I}_{COMM}$, to convert the received signal $r(t)$ into the CPICH output vector $s_i^{(1)}$.

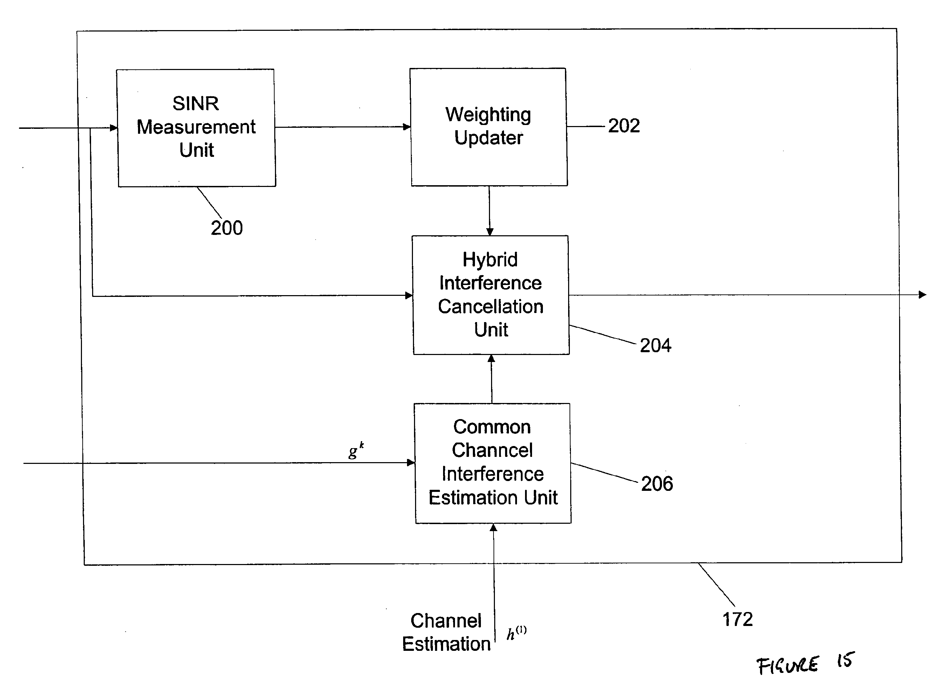

Operation of a common channel interference estimator 84 now follows with reference to Figure 7. The common channel interference estimator 84 illustrated in Figure 7 is that which receives the common pilot channel (CPICH) signal; it would be appreciated that the other common channels noted in the introduction will also have corresponding common channel interference estimators 84. A code track unit 89 generates a plurality of initial channel estimates $\tau$, which are each multiplied with the input CPICH signal in a series of multipliers 91 to resulting a plurality of products or fingers of the first channel estimate.

A series of multipliers 90, identical in number to the number of fingers of the first channel estimate $\hat{h}^{(1)}$, multiply the received CPICH signal by respective ones of the first channel estimates $h^{(1)}$. The products of these multiplications are then passed to further multipliers 92 which multiply each product by a respective weight $\gamma_\ell$. The weighted products are then passed to a series of adders 94.

Each adder 94 corresponds with a finger of the input first channel estimate $\hat{h}^{(1)}$, and is operable to receive weighted products in respective of all other fingers, and to add these to produce a common pilot channel interference value $I_{CPICH}(n)$ in respect of finger n. Thus, the common channel interference estimate in respect of the common pilot channel signal, as illustrated in Figure 7, forms a series of, common pilot channel estimates $I_{CPICH}(n)$ corresponding to the number of fingers in the first channel estimate $h^{(1)}$. The plurality of interference estimates are then passed to a series of collators, the function of one of which is illustrated in Figure 8.

As shown in Figure 8, the interference estimate corresponding with the 1th, in respect of the common pilot channel, the synchronising channel and all of the physical channels extracted from the common physical channel extractor 82, are added together in an adder 96 of the collator 86. This then output as a common channel interference estimate for the 1th finger $\hat{I}_{COMM}(\ell)$. Each collator 86 produces a corresponding one of these interference estimates, to produce the overall common channel interference estimate $\hat{I}_{COMM}$. This overall interference estimate $\hat{I}_{COMM}$ is then passed to the common channel interference cancellation unit 88 the common function of which is illustrated further in Figure 9.

The common interference cancellation unit 88 receives the received signal $r(t)$ and, by means of a series of adders 98, each element of the common channel interference estimate $\hat{I}_{COMM}$ is subtracted from the received signal $r(t)$. This results in the output of a series of scalar thighs making up a CPICH output vector $s_i^{(1)}$.

Figure 10 illustrates the first despreader/rake unit 74 in further detail. It would be appreciated that the second despreader/rake unit 80 is of similar construction and function, merely receiving different inputs and producing different outputs.

The despreader/rake unit 74 comprises a despreader 100 and a rake 102. The despreader 100 receives the output vector from the corresponding interference estimation and cancellation unit 72 and the DPCH symbol $C_{DPCH}$, to produce a despreader a vector $y$, which is then sent to the rake 102. The rake 102 then applies a rake function to the despreader vector $y$ with respect to the first channel estimate $h^{(1)}$. The output of the rake 102 comprises a data

stream $\hat{b}^{(1)}$, which is then forwarded, in this case, for further estimation and cancellation in the DPCH self-interference estimation and cancellation unit 76.

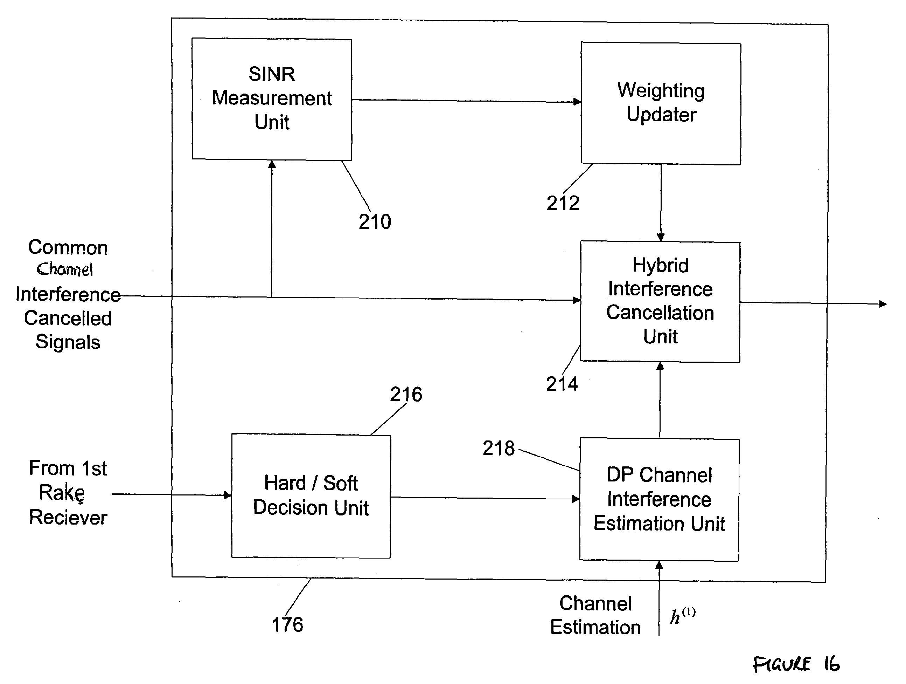

The structure of the DPCH self-interference estimation and cancellation unit 76 is illustrated in Figure 11. As shown, the DPCH self-interference estimate and cancellation unit 76 comprises a DPCH interference estimator 114, which receives the data stream $b^{(1)}$ from the first despreader/rake unit 74, and the initial estimated value $s_i^{(1)}$ a DPCH self-interference estimate $\hat{I}_{DPCH}$. A DPCH cancellation unit 106 then applies that DPCH self-interference estimate $\hat{I}_{DPCH}$ to the CCIC output vector $s_i^{(1)}$ to generate the DPCH output vector $s_i^{(2)}$.

With reference to Figure 12, the DPCH interference estimator 104 comprises a decision unit 108 which receives the signal from the first despreader/rake unit 74 and converts this signal into a hard or quantised form for further processing. The modified signal is then fed into a series of multipliers 110. Each of the multipliers 110 multiplies the modified signal by an element of the first channel estimate $h^{(1)}$, to produce a series of products. Each of the products is then sent to a respective respreader 112. The output of each respreader is then passed to a multiplier 114, each respread signal being multiplied by a weighting $\gamma_\ell$. The products output from these multipliers 114 are then used by a series of adders 116. There are as many adders 116 as there are fingers of the first channel estimate $h^{(1)}$. Each adder 116 corresponds with one of the fingers and, in determining its sum, at the outputs of all multipliers other than the multiplier corresponding with the finger with which it corresponds. The outputs of all of the adders 116 are combined into a DPCH interference estimate $\hat{I}_{DPCH}$.

The DPCH interference cancellation unit 106 then applies the DPCH interference cancellation signal $\hat{I}_{DPCH}$ in the same manner as the common channel interference cancellation unit 88 of the common channel interference estimation and cancellation unit 72, to cause generation of a DPCH output vector $s_i^{(2)}$.

The DPCH output vector $s_i^{(2)}$ is applied to a channel despreader/estimator to produce a second channel estimate $h^{(2)}$. Figure 13 illustrates the channel despreader/estimator 78 in further detail, comprising a despreader 118 and a channel estimator 120 acting on the output of the despreader 118. The despreader 118 despreads the DPCH output vector $s_i^{(2)}$ with respect to the common pilot channel signal symbol $C_{CPICH}$.

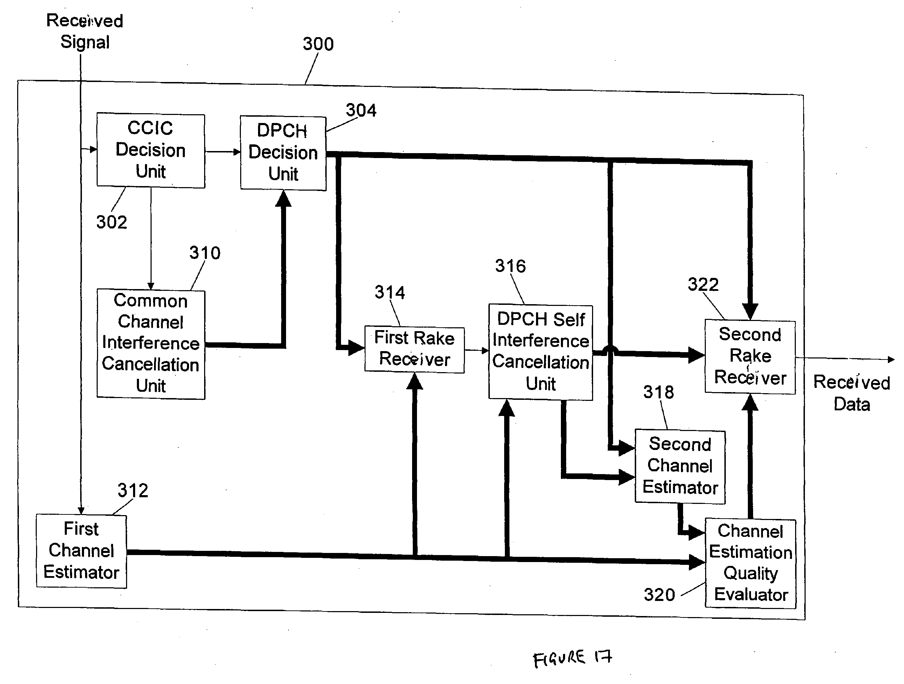

A receiver according to a second embodiment of the invention is illustrated in figure 14. Where convenient, elements of the receiver 152 of the second embodiment are described as having the same structure and function as corresponding elements of the receiver described above with regard to the first embodiment. This will be indicated in the following description where it applies.

A signal received from the antenna 18 is fed into a common channel interference cancellation unit 172 and a channel estimator 170. The channel estimator 170 calculates an initial estimate of the channel parameters of the received signal and outputs L separated multipath components of the signal. The common channel interference cancellation unit 172 receives these L multipath components as an initial estimate from the channel estimator 170.

The common channel interference cancellation unit 172 is operable, in use, to cancel, if necessary, the interference from the common channels by producing interference replica based on the initial parameters provided by the channel estimator 170 and subtracting these from the received signal. This is described in further detail below.

The L multipath components of the signal, now with common channel interference removed, are input into a first rake receiver 174, and also into a DPCH self-interference cancellation unit 176. The first rake receiver 174 is configured by the L multipath components of the output of the channel estimator 170, and the output of this rake receiver 174 is further input into the DPCH self-interference cancellation unit 176.

The DPCH self-interference cancellation unit 176 estimates the interference due to dedicated physical channel self-interference, again using the initial channel parameter estimates provided by the channel estimator 170. The DPCH self-interference cancellation unit 176 is also described in further detail below.

The signal output from the DPCH self-interference cancellation unit 176 is then fed into a second rake receiver 180, and into a channel response calculator 178. The channel response calculator 178 uses the interference-cancelled signal to provide new channel estimates, which are then fed into a channel estimation quality evaluator 182, along with the initial channel estimate provided by the channel estimator 170. The channel estimation quality evaluator 182 determines which set of channel parameter estimates, i.e. the output of the channel estimator 170 or the output of the channel response calculator 178, provides a higher signal to interference-and-noise ratio (SINR), and selects that set of channel parameter estimates for forwarding to the second rake receiver 180 to use during Maximal Ratio Combining.

Further structure and the operation of the common channel interference cancellation unit 172 will now be described with reference to Figure 15. A SINR measurement unit 200 receives the signal received from the antenna, alongside a hybrid interference cancellation unit 204.

A common channel interference estimation unit 206 is operable to receive a transmitted common channel signal $g_k$ and the L elements of the output of the channel estimator 170. The common channel interference estimation unit 206 is operable to output L channel interference estimates, corresponding to the L input signals, to the hybrid IC unit 204. As illustrated, the hybrid IC unit 204 and the common channel interference estimation unit 206 each comprise L replica elements, corresponding to the L elements of their respective inputs.

The SINR measurement unit 200 evaluates the signal to interference plus noise for each multipath component, and provides the result to a weighting updater 202. The weighting updater 202 needs frequent updating when the channel is fading, and a suitable weighting can use SINR or MSE for the quality of channel estimation evaluation. The L weightings provided by the weighting updater 202 for the multi-paths are then supplied to the Hybrid Interface Cancellation Unit 204. The Hybrid Interference Cancellation Unit 204 uses these weightings to switch between Serial Interference Cancellation and Parallel Interference Cancellation, or a mixture of both. The manner in which this is achieved will be described in due course.

The common channel interference estimation unit 206 receives the initial channel parameter estimates from the first channel estimator 170, along with transmitted common channel signal $g_k$, and provides the Hybrid Interference Cancellation unit 204 with interference replica for each multipath to be subtracted from the received signal.

The formula used to estimate the common channel interference can be expressed as:

$$\hat{I}_{comm\_i} = \sum_{k=2}^{K} \sum_{\substack{l=1 \\ l \neq i}}^{L} \gamma_{i,l}^{(1)} g_{k,l}^{k \neq 1}$$

where K is the number of physical channels; L is the number of multi-paths; $\gamma_{k,l}^{(1)}$ is the weighting factor for the common channel interference cancellation unit for the lth multi-path at the ith Rake finger; and $g_{k,l}^{k \neq 1}$ is the replica of signals for the lth multipath of the kth common channel.

The Rake receiver 172 uses an MSA algorithm for code tracking, and despreads the signal. The Rake receiver 172 then uses Maximal Ratio Combining to combine the despread multi-paths,

The DPCH self-interference cancellation unit 176 is shown in more detail in Figure 16. The signal, with common channel interference removed, is supplied to the DPCH self-interference cancellation unit 176, and is fed into a SINR measurement unit 210. A despread signal from the first rake receiver 174 is input to a hard/soft decision unit 216. The decision unit 216 uses the received signal to provide a dedicated physical channel interference estimation unit 218 with a hard or soft weighting, which is used by the dedicated physical channel interference estimation unit 218 when providing the Hybrid interference cancellation unit 214 with interference replica for each multipath. The SINR measurement unit 210 determines the signal to interference and noise ratio (SINR) of the signal with common channel interference cancelled, and provides this information for each multipath to the weighting updater 212. Weighting updater 212 then provides a weighting to the hybrid interference cancellation unit 214 for each multi-path to weight it between parallel or serial interference cancellation methods, or a hybrid of the two.

The formula used to estimate the dedicated physical channel interference can be expressed as:

$$\hat{I}_{dpch\_i} = \sum_{\substack{l=1 \\ l \neq i}}^{L} \gamma_{i,l}^{(2)} \hat{s}_l$$

where $\gamma_{i,j}^{(2)}$ is the weighting factor of the interference cancellation unit for a multi-path $l$ at a Rake finger $i$; and $\hat{s}l$ is the replica for the dedicated physical channel self-interference for the multipath $l$.

A third embodiment of the invention provides a receiver including pre-and-post interference cancellation (PAP-IC) as illustrated in Figure 17.

The receiver 300, as illustrated in Figure 17, is capable of being used as an alternative to the receiver 52 as illustrated in Figure 5. The receiver 300 receives a signal from the antenna 18 and applies interference cancellation to the received signal, to provide a received data signal to the processing unit 56.

Certain of the component units of the receiver 300 are equivalent in structure and function to components of the receiver 52 of the first embodiment. Where this is the case, it will be indicated in the following description.

The received signal is presented to a first channel estimator 312 and to a CCIC decision unit 302. The CCIC decision unit 302 is operable to determine, on the basis of the received signal, when a common channel interference cancellation is required. If common channel interference cancellation is required, then the received signal is passed to a common channel interference cancellation unit 310. The common channel interference cancellation unit 310 is also configured by a first channel estimate output from the first channel estimator 312. A DPCC decision unit 304 receives the received signal, either on the CCIC decision unit 302 considering that common channel interference cancellation is not required or, if the CCIC decision unit 302 has passed the received signal to the common channel interference cancellation unit 310, that the signal output from that unit 310 is passed to the DPCC decision unit 304. The DPCC decision unit 304 is operable to determine if DPCC self-interference cancellation is required. To this end, the DPCC decision unit 304 is capable of outputting a signal to a first rake receiver 314, configured by the first channel estimate, for passage of signal data to a DPCH self-interference cancellation unit 316. The first rake receiver 314 and the DPCH self-interference cancellation unit 316 are both configured by the first channel estimate generated by the first channel estimator. An output from the DPCH self-interference cancellation unit 316 is passed to a second channel estimator 318, and to a second rake receiver 322. The second channel estimator 318 provides, on the basis of its input, a second channel estimate which is compared, with the first channel estimate, by a channel estimation quality evaluator 320, to determine which of the two channel estimates is of higher quality in terms of signal to inference and noise ratio. The higher quality of these two signals is passed to the second rake receiver 322 for configuration of the input to that rake receiver.

Further, the DPCC decision unit 304 is capable, on determination that DPCC self-interference cancellation is not required, to pass the signal received by that unit 304 to channel estimation, bypassing the self-interference cancellation stage of the receiver 300. In this case, the signal is passed directly to the second channel estimator 318 and the second rake receiver 322, to provide received data at an output of the second rake receiver 322.

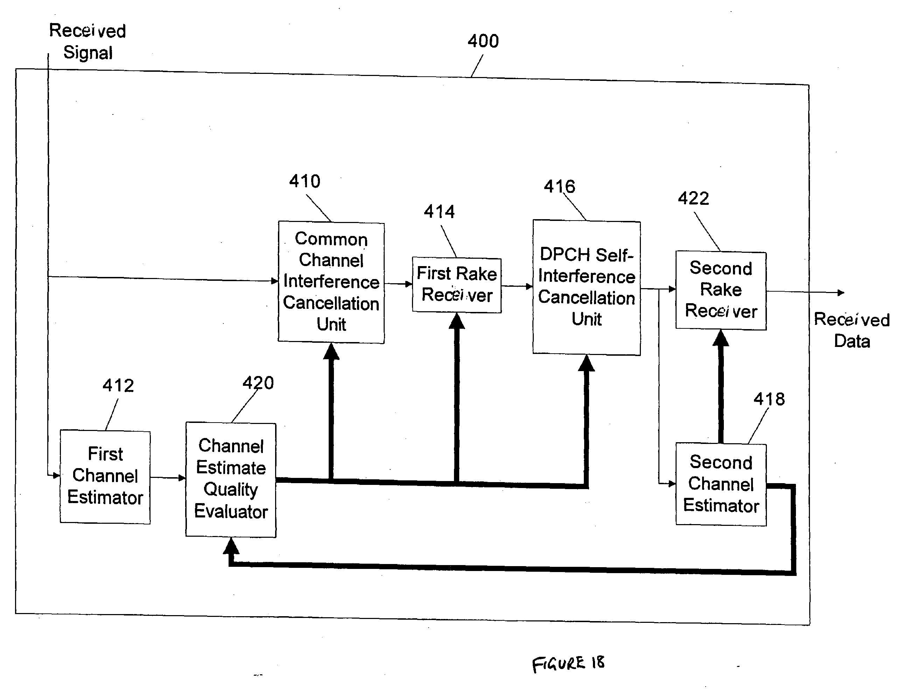

A fourth embodiment of the invention provides post-interference cancellation to achieve a specified quality of service in a communications system. The post-interference cancellation takes advantage of high quality channel estimation and performance improvement. The fourth embodiment of a receiver 400 is illustrated in Figure 18; it will be appreciated that this third embodiment of a receiver 400 can be used in place of the receiver 52 in the arrangement illustrated in Figure 5.

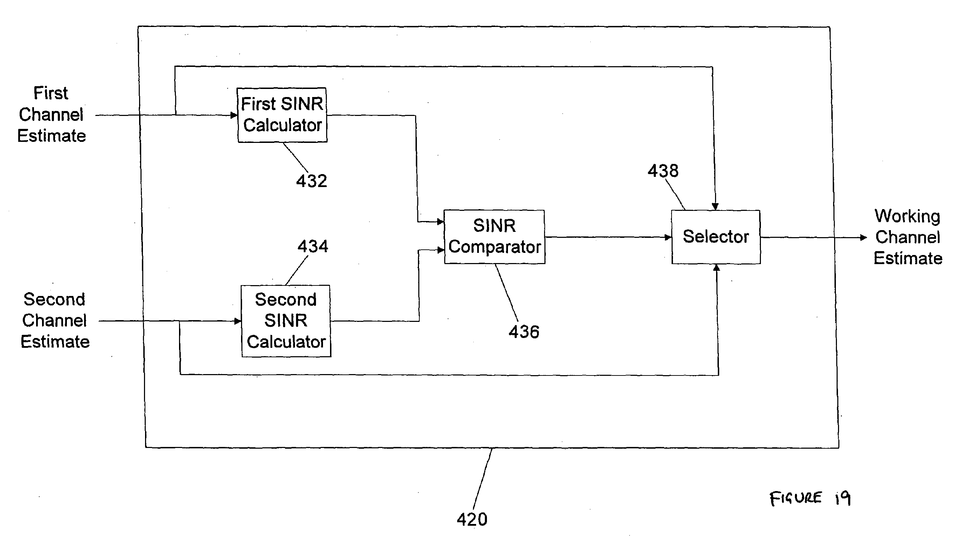

The fourth embodiment will now be described with reference to Figures 18 and 19. As above, where elements of the receiver 400 are equivalent in structure and function to elements of the receiver 52 of Figure 5, this will be noted in the description.

A received signal is received in a common channel interference cancellation unit 410. The received signal first channel estimator 412 feeds a first channel estimate into a channel estimate quality evaluator 420. The channel estimate quality evaluator 420 also receives a second channel estimate fed back from a second channel estimator 418 to be described in due course.

The higher quality of these two channel estimates is then fed forward as a working channel estimate, for configuration of the common channel interference cancellation unit 410, and further for a first rake receiver 414 and a DPCH self-interference cancellation unit 416.

The output of the DPCH self-interference cancellation unit is fed to a second rake receiver 422 and also to a second channel estimator 418 which is operable to generate a second channel estimate on the basis of the output of the DPCH self-interference cancellation unit, for feeding back to the channel estimate quality evaluated as described above, and also to configure the second rake receiver 422, for production of a received data signal for output to the processor.

The channel estimate quality evaluator 420 is illustrated in further detail in Figure 19. The channel estimate quality evaluator 420 receives first and second channel estimates, as noted above, which are passed to first and second Signal to Interference Noise Ratio (SINR) calculators 432, 434 respectively. The first and second SINR calculators 432, 434 are operable to generate SINR calculations on the basis of received signals. These SINR measurements are then passed to an SINR comparator 436, which determines the higher of the two SINR measurements. This determines which of the received channel estimates has higher quality. The SINR comparator 436 sends a selection signal to a selector 438, which selects the one of first and second channel estimates measurements and outputs the selected channel estimate for use as a working channel estimate in the receiver 400.

Various specific embodiments of the present invention have been described above. However, it is not intended that the invention be limited to these embodiments. Various modifications will be apparent to those skilled in the art. The features of the arrangements described above may be combined in various ways to provide similar advantages in alternative arrangements.

The present invention can be implemented either in hardware or on software in a general purpose computer. Further the present invention can be implemented in a combination of hardware and software. The present invention can also be implemented by a single processing apparatus or a distributed network of processing apparatuses.

Since the present invention can be implemented by software, the present invention encompasses computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal.

While a general purpose computer is envisaged to be suitable for performance of the invention as exemplified by any embodiment described above, it will also be appreciated that the invention is appropriate for implementation in a mobile telephone, electronic personal organiser, or any other hand-held personal mobile electronics device.

**Claims**

1. A receiver (52) for receiving a CDMA signal comprising common channel interference cancellation means (72) operable to cancel common channel interference by applying a common channel interference estimate to the received signal through a weighted hybrid of parallel and serial interference cancellation, and physical channel self-interference cancellation means (76) operable to cancel physical channel self-interference by applying an interference estimate to the received signal through a weighted hybrid of parallel and serial interference cancellation.

2. The receiver of claim 1 comprising initial channel estimation means, said first channel estimation means being operable to generate a plurality of estimates of multipath components of the received signal for use by said common channel interference cancellation means for determining an initial channel estimate comprising a plurality of multipath components of said received signal, and multipath realignment means operable to align said multipath components of said received signal, into a coherent received signal for use by said physical channel self-interference cancellation means.

3. The receiver according to claim 2 wherein said multipath realignment means is a rake receiver.

4. The receiver according to claim 2 or claim 3 further comprising additional channel estimation means for determining an additional channel estimate comprising a plurality of multipath components of said signal after common channel interference cancellation and physical channel self-interference cancellation, for use, selectively or otherwise, with additional multipath realignment means operable to align multipath components of said signal after common channel interference cancellation and physical channel self-interference cancellation with reference to one of said initial and additional channel estimates.

5. The receiver according to claim 4 wherein the additional multipath realignment means is a rake receiver.

6. The receiver according to claim 4 or claim 5 and further comprising channel estimate selection means for selecting one or other of the initial channel estimate and the additional channel estimate, for use in the common channel interference cancellation means,

7. The receiver according to claim 4 or claim 5 and further comprising channel estimate selection means for selecting one or other of the initial channel estimate and the additional channel estimate, for use in the initial multipath realignment means,

8. The receiver according to claim 4 or claim 5 and further comprising channel estimate selection means for selecting one or other of the initial channel estimate and the additional channel estimate, for use in the physical channel self-interference cancellation means,

9. The receiver according to claim 4 or claim 5 and further comprising channel estimate selection means for selecting one or other of the initial channel estimate and the additional channel estimate, for use in the additional multipath realignment means.

10. The receiver according to claim 6 wherein the selection means is operable to compare the initial channel estimate and the additional channel estimate and, on the basis of a measurable condition, to select one or other of said estimates for use.

11. The receiver according to claim 10 wherein said selection means comprises determining means for determining a measure of interference and noise in each said channel estimate, and comparison means for comparing said measurements, and is operable to select the channel estimate on the basis of the result of comparison.

12. The receiver according to claim 11 wherein said measure determined by said determining means comprises a ratio of signal to interference-plus-noise.

13. A method of processing a CDMA signal, to reduce the effect of interference on said signal, including cancelling common channel interference by applying a common channel interference estimate to the received signal through a weighted hybrid of parallel and serial common channel interference cancellation, and cancelling physical channel self-interference by applying an interference estimate to the received signal through a weighted hybrid of parallel and serial physical channel self-interference cancellation.

14. The method according to claim 13 further comprising the steps of generating a plurality of estimates of multipath components of the received signal, for use in said common channel interference cancellation step, determining an initial channel estimate comprising a plurality of multipath components of said received signal, and aligning said multipath components of said received signal into a coherent received signal for use in said physical channel self-interference cancellation step.

15. The method according to claim 14 including the step of providing a rake receiver and wherein said multipath realignment step is performed in said rake receiver.

16. The method according to claim 14 or claim 15 further comprising an additional channel estimation step of determining an additional channel estimate comprising a plurality of multipath components of said signal after common channel interference cancellation and physical channel self-interference cancellation, for performance, selectively or otherwise, with an additional multipath realignment step of aligning multipath components of said signal after common channel interference cancellation and physical channel self-interference cancellation with reference to one of said initial and additional channel estimates.

17. The method according to claim 16 including the step of providing an additional rake receiver and wherein said additional multipath realignment step is performed in said additional rake receiver.

18. The method according to claim 16 or claim 17 and further comprising selecting one or other of the initial channel estimate and the additional channel estimate, for use in the common channel interference cancellation means.

19. The method according to claim 16 or claim 17 and further comprising selecting one or other of the initial channel estimate and the additional channel estimate, for use in the initial multipath realignment means.

20. The method according to claim 16 or claim 17 and further comprising selecting one or other of the initial channel estimate and the additional channel estimate, for use in the physical channel self-interference cancellation means.

21. The method according to claim 16 or claim 17 and further comprising selecting one or other of the initial channel estimate and the additional channel estimate, for use in the additional multipath realignment means.

22. The method according to any one of claims 18 to 21 wherein the selection step comprises comparing the initial channel estimate and the additional channel estimate and, on the basis of a measurable condition, selecting one or other of said estimates for use.

23. The method according to claim 22 wherein said selection step comprises determining a measure of interference and noise in each said channel estimate, comparing said measurements, and selecting the channel estimate on the basis of the result of comparison.

24. The method according to claim 23 wherein said measure determined by said determining means comprises a ratio of signal to interference-plus-noise.

25. A receiver (52) for receiving a CDMA signal, the receiver comprising means for deriving a first channel estimate from the received signal, means for cancelling common channel interference from said received signal (72), means for deriving a second channel estimate from said received signal after cancellation of common channel interference, and means for cancelling physical channel self-interference in said common channel interference cancelled signal (76).

26. A method of processing a CDMA signal, to reduce the effect of interference on said signal, comprising deriving a first channel estimate from the received signal, cancelling common channel interference from said received signal, deriving a second channel estimate from said received signal after cancellation of common channel interference, and cancelling physical channel self-interference in said common channel interference cancelled signal.

27. A computer readable storage medium bearing computer readable data defining executable instructions operable, when loaded into a computer apparatus to configure the apparatus into a receiver for receiving a CDMA signal comprising common channel interference cancellation means operable to cancel common channel interference by applying a common channel interference estimate to the received signal through a weighted hybrid of parallel and serial interference cancellation, and physical channel self-interference cancellation means operable to cancel physical channel self-interference by applying an interference estimate to the received signal through a weighted hybrid of parallel and serial interference cancellation.

28. A computer readable storage medium bearing computer readable data defining executable instructions operable, when loaded into a computer apparatus to configure the apparatus to perform a method of processing a CDMA signal, to reduce the effect of interference on said signal, including cancelling common channel interference by applying a common channel interference estimate to the received signal through a weighted hybrid of parallel and serial common channel interference cancellation, and cancelling physical channel self-interference by applying an interference estimate to the received signal through a weighted hybrid of parallel and serial physical channel self-interference cancellation.

29. A computer readable storage medium bearing computer readable data defining executable instructions operable, when loaded into a computer apparatus to configure the apparatus into a receiver for receiving a CDMA signal, the receiver comprising means for deriving a first channel estimate from the received signal, means for cancelling common channel interference from said received signal, means for deriving a second channel estimate from said received signal after cancellation of common channel interference, and means for cancelling physical channel self-interference in said common channel interference cancelled signal.

30. A computer readable storage medium bearing computer readable data defining executable instructions operable, when loaded into a computer apparatus to configure the apparatus to perform a method of processing a CDMA signal, to reduce the effect of interference on said signal, comprising deriving a first channel estimate from the received signal, cancelling common channel interference from said received signal, deriving a second channel estimate from said received signal after cancellation of common channel interference, and cancelling physical channel self-interference in said common channel interference cancelled signal.

FIGURE 1

FIGURE 2A

FIGURE 2B

FIGURE 2C

FIGURE 3

r(t)

t(t)

18

Receiver
52

Transmitter
54

50

Processing Unit
56

Memory
58

Subscriber Identity Module
60

Microphone
62

User Input Interface
64

Audio/Visual Output Unit
66

FIGURE 4

FIGURE 5

EP 1 569 355 A2

FIGURE 6

FIGURE 7

FIGURE 8

23

FIGURE 9

s

Despreader 100

$C_{DPCH}$

y

Rake 102

$\hat{h}$

74

$\hat{b}$

FIGURE 10

FIGURE 11

FIGURE 12

EP 1 569 355 A2

$s_i^{(2)}$

118

**Despreader**

120

**Channel Estimator**

$\hat{h}^{(2)}$

$C_{CPICH}$

78

FIGURE 13

28

FIGURE 14

EP 1 569 355 A2

FIGURE 15

FIGURE 16

FIGURE 17

FIGURE 18

EP 1 569 355 A2

First
Channel
Estimate →

| First SINR Calculator |
432

Second
Channel
Estimate →

| Second SINR Calculator |
434

| SINR Comparator |
436

438
| Selector | → Working Channel Estimate

420

FIGURE 19